# NEUE EUROPÄISCHE PATENTSCHRIFT

(11) **EP 2 997 805 B2**
(45) Veröffentlichungstag und Bekanntmachung des Hinweises auf die Entscheidung über den Einspruch: **27.10.2021**
(45) Hinweis auf die Patenterteilung: 10.10.2018
(21) Anmeldenummer: 15182013.1
(22) Anmeldetag: 21.08.2015
(51) Int. Cl.: A01B 67/00, A01B 79/00, B60W 30/188, B60W 50/00

(54) **LANDWIRTSCHAFTLICHE ARBEITSMASCHINE MIT UND VERFAHREN ZUR VORAUSSCHAUENDEN REGELUNG EINER ANTRIEBSLEISTUNG UND/ODER EINES ANTRIEBSSTRANGES**
AGRICULTURAL MACHINE WITH AND METHOD FOR PREDICTIVE CONTROL OF DRIVING POWER AND/OR A DRIVE TRAIN
MACHINE AGRICOLE ET PROCEDE DE REGLAGE PREVISIONNEL D'UNE PUISSANCE D'ENTRAINEMENT ET/OU D'UNE CHAINE CINEMATIQUE

(30) Priorität: 16.09.2014 DE 102014113335
(43) Veröffentlichungstag der Anmeldung: 23.03.2016
(73) Patentinhaber: CLAAS Tractor S.A.S., 78141 Vélizy-Villacoublay Cedex (FR)
(72) Erfinder: Birkmann, Christian, 33775 Versmold (DE); Fedde, Thomas, 33129 Delbrück (DE); Wieckhorst, Jan Carsten, 33098 Paderborn (DE)
(74) Vertreter: CLAAS Gruppe

(56) Entgegenhaltungen:
- EP-A1- 1 306 536
- WO-A1-2012/007549
- DE-A1- 10 103 013
- US-A- 5 832 400
- US-A- 5 995 895
- US-A1- 2014 039 758
- "GreenStar 3 Display 2630", Betriebsanleitung, vol. J3, 2013,

## Beschreibung

Die vorliegende Erfindung betrifft eine landwirtschaftliche Arbeitsmaschine mit einer vorausschauenden Regelung einer Antriebsleistung und/oder eines Antriebsstranges, sowie ein Verfahren zur vorausschauenden Regelung der Antriebsleistung und/oder eines Antriebsstranges einer landwirtschaftlichen Arbeitsmaschine.

Moderne landwirtschaftliche Arbeitsmaschinen, beispielsweise Traktoren, Feldhäcksler, Mähdrescher oder andere landwirtschaftliche Maschinen zur Bearbeitung eines Feldes oder Erntegutes, weisen Getriebe auf, deren Übersetzungen manuell oder automatisch geschaltet werden können. Die Getriebe können dabei beispielsweise synchronisierte, teilweise oder vollständig unter Last schaltbare Stufengetriebe oder stufenlose leistungsverzweigte Getriebe sein. Eine Auswahl oder Schaltung einer zu nutzenden Getriebeübersetzung kann dabei sowohl manuell durch einen Bediener der landwirtschaftlichen Arbeitsmaschine erfolgen, als auch automatisch durch ein Antriebsstrangmanagement mittels einer üblicherweise als Fahrregler bezeichneten Vorrichtung. Des Weiteren gibt es mechanische und/oder hydraulische und/oder elektrische Nebenantriebe und/oder Arbeitsantriebe, welche entweder durch den Bediener und/oder ein Steuergerät und/oder den Fahrregler gesteuert werden. Zusätzlich zu einer Einstellung einer Getriebeübersetzung kann eine Veränderung einer Motordrehzahl und/oder des Motordrehmoments und/oder der Antriebsleistung vorgenommen werden, um diese entsprechend einer eingestellten Konfiguration des Antriebsstranges anzupassen. Eine Konfiguration des Antriebsstranges kann beispielsweise die Schaltung einer bestimmten Getriebeübersetzung sein. Bei einer manuellen Schaltung der Getriebeübersetzung durch den Bediener kann dieser beispielsweise ebenfalls manuell die Motordrehzahl einstellen. Bei einer automatischen Schaltung der Getriebeübersetzung durch ein Antriebsstrangmanagement kann dies beispielsweise automatisch neben der Getriebeübersetzung auch Antriebsleistung des Antriebsmotors, insbesondere die Motordrehzahl und/oder das Motordrehmoment, regeln.

Die Steuervorrichtung greift dabei zur Steuerung des Antriebsstrangmanagements üblicherweise auf aktuell erfasste Zustandsinformationen verschiedener Sensoren und Schnittstellen der landwirtschaftlichen Arbeitsmaschine zurück. Da hierbei lediglich die aktuellen Zustandsinformationen der Arbeitsmaschine berücksichtigt werden können, kann es zu einer Beeinträchtigung der Funktion des Fahrreglers kommen. Beispielsweise kann es aufgrund einer schnellen Abfolge von Änderungen der erfassten Zustände zu einer ungünstigen Regelung des Getriebes oder des Motors kommen.

Aus der US 5 995 895 A ist ein Steuersystem zur Steuerung eines Fahrzeugsystems zumindest teilweise basierend auf einer angenommenen Kondition entlang der Route des Fahrzeuges bekannt. Das Steuersystem weist eine Speichereinheit auf, in welcher vorgegebene geo-referenzierte Karten einschließlich von Kartendaten mit angenommenen Konditionen gespeichert sind. In Verbindung mit einem Positionssignal sagt das Steuersystem die angenommenen Konditionen vorher und erzeugt darauf basierende Steuersignale für das Fahrzeugsystem.

Aus der EP 1 353 828 A1 ist ein Verfahren bekannt, bei dem zur Umsetzung einer konstanten Geschwindigkeit im Gefälle die erforderliche Bremsleistung als Funktion des Fahrzeuggewichts einschließlich der Beladung des Fahrzeugs bestimmt wird, wobei mehrere Parametersätze für die Regelung abgelegt werden, welche auf unterschiedliche Fahrzeuggewichte ausgelegt sind. Zusätzlich kann die erforderliche Bremsleistung als Funktion der Topografie bestimmt werden, wobei die Topografie mittels einer Navigationseinrichtung in die Anpassung der Parameter einfließen kann. Hierbei dient die Topografie lediglich als zusätzliches Auswahlkriterium für eine Kennlinie, die als Grundlage für die Regelung der Bremsleistung dient, wenn die Bremse durch einen Bediener betätigt wird. Nachteilig ist hierbei, dass eine direkte, insbesondere automatische, von der Topografie abhängige Regelung der Bremsleistung nicht erfolgt. Ebenso wenig ist eine Regelung der Antriebsleistung möglich. Folglich ist es weiterhin erforderlich, dass der Bediener sein Augenmerk auf die Straße richtet, um die Geschwindigkeit bei einem Gefälle durch einen entsprechenden Bremseingriff zu reduzieren oder konstant zu halten.

Es ist daher die Aufgabe der Erfindung, eine landwirtschaftliche Arbeitsmaschine bereitzustellen, welche eine verbesserte Regelung der Antriebsleistung und/oder des Antriebsstranges ermöglicht. Weiterhin ist es die Aufgabe der Erfindung, ein Verfahren anzugeben, dass eine verbesserte Regelung der Antriebsleistung und/oder des Antriebsstranges einer landwirtschaftlichen Arbeitsmaschine ermöglicht.

Die Aufgabe wird erfindungsgemäß durch die Patentansprüche 1 und 7 gelöst. Vorteilhafte Ausgestaltungen und Weiterbildungen der Erfindung ergeben sich aus den nachstehenden Unteransprüchen und den nachfolgenden Beschreibungen.

Durch die vorausschauende Regelung der Antriebsleistung des Antriebsmotors und die Regelung des Antriebsstranges der landwirtschaftlichen Arbeitsmaschine kann eine Regelung entsprechend der zu erwartenden Umweltbedingungen erfolgen, bevor diese Umweltbedingungeneintreten und eine Regelung der Antriebsleistung und/oder des Antriebsstranges erforderlich machen würden. Eine Umweltbedingung, welche die benötigte Antriebsleistung und/oder Antriebsstranglast der landwirtschaftlichen Arbeitsmaschine beeinflusst, ist beispielsweise eine Steigung in der Fahrroute oder eine Veränderung einer Bodenbeschaffenheit, welche zu einem erhöhten Bedarf an Antriebsleistung und/oder Antriebsstranglast führen können. Die vorausschauende Regelung der Antriebsleistung und/oder des Antriebsstranges hat den Vorteil, dass der Antriebsstrang mit dem Eintritt einer Änderung der Umweltbedingungen bereits auf diese Änderung vorbereitet ist und die benötigte Antriebsleistung und/oder die erforderliche Antriebsstrangkonfiguration verfügbar sind. Dadurch kann beispielsweise der Antriebsmotor effizienter betrieben werden, da eine Erhöhung der Antriebsleistung und/oder Änderung der Antriebsstrangkonfiguration erst rechtzeitig bei Bedarf erfolgt, wodurch ein Abwürgen des Antriebsmotors vermieden werden kann, wie beispielsweise bei einem plötzlichen sprunghaften Anstieg der benötigten Antriebsleistung und/oder Antriebsstranglast. Zudem kann der Antriebsstrang, insbesondere das Getriebe, frühzeitig vor einem Eintritt der Änderung der Umweltbedingung geschaltet werden, wodurch der Antriebsmotor in einem optimalen Betriebspunkt betreibbar ist. Dadurch kann eine effizientere und verbesserte Regelung der Antriebsleistung und/oder des Antriebsstranges ermöglicht werden. Durch die vorausschauende, insbesondere automatische, Regelung der Antriebsleistung und/oder des Antriebsstranges kann zudem die Arbeitsbelastung des Bedieners der landwirtschaftlichen Arbeitsmaschine weiter reduziert werden, da dieser nicht mehr kontinuierlich seine Aufmerksamkeit auf den vorausliegenden Verlauf der Fahrroute richten muss, um rechtzeitig regelnd eingreifen zu können.

In einer weiteren Ausgestaltung der Erfindung ist die Steuervorrichtung derart ausgebildet und eingerichtet, dass eine von der landwirtschaftlichen Arbeitsmaschine entlang einer zurückzulegenden Fahrroute benötigte Antriebsleistung des Antriebsmotors und/oder Antriebsstranglast vorausschauend ermittelbar sind. Die vorausschauende Ermittlung der benötigten Antriebsleistung und/oder Antriebsstranglast kann die, insbesondere wiederholte und/oder kontinuierliche, Ermittlung der benötigten Antriebsleistung und/oder Antriebsstranglast für einen von der Arbeitsmaschine zu befahrenden Teilbereich der Fahrroute oder eine vollständige Ermittlung der benötigten Antriebsleistung und/oder Antriebsstranglast entlang der gesamten Fahrroute sein. Durch die vorherige Ermittlung der benötigten Antriebsleistung und/oder Antriebsstrangkonfiguration kann die Steuervorrichtung die Antriebsleistung und/oder den Antriebsstrang effizienter regeln, da der Zielwert, die zu einem bestimmten Zeitpunkt benötigte Antriebsleistung, Antriebsstranglast und/oder Antriebsstrangkonfiguration, bereits abrufbar ermittelt sind und dadurch aufwendige Berechnungen entfallen.

In einer besonders bevorzugten Ausgestaltung der Erfindung sind die Antriebsleistung und/oder die Antriebsstranglast der landwirtschaftlichen Arbeitsmaschine mittels einer Regelung des Antriebsmotors und des Antriebsstranges, insbesondere mittels einer vorherbestimmbaren Konfiguration des Antriebsstranges, regelbar. Eine Regelung des Antriebsstranges der landwirtschaftlichen Arbeitsmaschine kann dabei beispielsweise die Regelung des Getriebes, eines Nebenverbrauchers und/oder eines Arbeitsantriebes sein. Der Antriebsstrang kann dabei sowohl mechanische, hydraulische und elektrische Antriebsstrangkomponenten, auch in Kombination z.B. in hybriden und/oder leistungsverzweigten Antriebssträngen, aufweisen. Die Regelung der Antriebsleistung und/oder des Antriebsstranges erhöht die Flexibilität des Steuergerätes, da beispielsweise eine Regelung der benötigten Antriebsleistung und/oder des Antriebsstranges über die Drehzahl, das Drehmoment und/oder eine verfügbare Leistung der Antriebsmaschine und/oder eine entsprechende Antriebsstrangkonfigurationen erfolgen kann. Besonders vorteilhaft ist jedoch, dass das Steuergerät die Antriebsleistung und/oder den Antriebsstrang vorausschauend regeln kann, so dass es beispielsweise bei Abruf einer benötigten, insbesondere höheren, Zugkraft zu keiner Zugkraftunterbrechung kommt.

Vorteilhafterweise sind Umweltbedingungen Steuerparameter, welche die benötigte Antriebsleistung und/oder Antriebsstranglast der landwirtschaftlichen Arbeitsmaschine, insbesondere entlang einer Fahrroute der landwirtschaftlichen Arbeitsmaschine, beeinflussen. Durch die Abbildung der Umweltbedingungen durch Steuerparameter können die Umweltbedingungen differenzierter erfasst und besser verarbeitet werden. Die Umweltbedingungen werden durch routenspezifische Steuerparameter in Form einer Topografie, insbesondere eines Höhenprofils, und/oder der Bodenbeschaffenheit entlang der Fahrroute dargestellt.

Vorteilhafterweise ist mindestens eine Umweltbedingung durch die landwirtschaftliche Arbeitsmaschine, und insbesondere durch die Steuervorrichtung, ermittelbar. Dies hat den Vorteil, dass die landwirtschaftliche Arbeitsmaschine unabhängig von einer Infrastruktur, durch welche beispielsweise von Dritten erzeugte Daten bereitgestellt werden können, die benötigten Umweltbedingungen, beispielsweise die Topografie entlang einer Fahrroute, erfassen kann.

In einer vorteilhaften Ausgestaltung der Erfindung ist eine mit der Steuervorrichtung zum Datenaustausch verbundene Navigationseinheit mit einem Routenplanungssystem zur Erstellung der Fahrroute vorgesehen. Dies hat den Vorteil, dass die Fahrroute unmittelbar an Bord der landwirtschaftlichen Arbeitsmaschine geplant werden kann, wobei insbesondere die von der Arbeitsmaschine erfassten oder bereitgestellten Umweltbedingungen zur Ermittlung der benötigten Antriebsleistung und/oder Antriebsstranglast entlang der Fahrroute verwendet werden können.

Gemäß der Erfindung ist eine mit der Steuervorrichtung verbundene Kommunikationseinheit zum Austausch von Daten, mit einer zentralen Rechnereinheit (38) vorgesehen, wobei die Daten Umweltbedingungen, Steuerparametern und/oder Fahrrouten umfassen. Die Kommunikationseinheit kann auch einen direkten Datenaustausch, insbesondere von Umweltbedingungen, Steuerparametern und/oder Fahrrouten, mit einer weiteren Arbeitsmaschine ermöglichen. Der Datenaustausch mit der zentralen Rechnereinheit und/oder einer weiteren Arbeitsmaschine hat den Vorteil, dass bereits erfasste Umweltbedingungen und/oder Fahrrouten erneut genutzt und geteilt werden können. Dadurch können bereits erfasste Umweltbedingungen und/oder Fahrrouten in eine aktuelle Ermittlung der benötigten Antriebsleistung entlang einer Fahrroute einfließen.

Weiterhin betrifft die Erfindung ein Verfahren zur vorausschauenden Regelung einer Antriebsleistung und eines Antriebsstranges nach den Merkmalen des Anspruchs 7.

Dies hat den Vorteil, dass der Antriebsstrang mit dem Eintritt einer Änderung der Umweltbedingungen bereits auf diese Änderung vorbereitet ist. Dadurch kann beispielsweise der Antriebsmotor effizienter betrieben werden, da eine Erhöhung der Drehzahl und/oder des Drehmoments und/oder der Antriebsleistung erst rechtzeitig bei Bedarf erfolgt, wobei ein Abwürgen des Antriebsmotors vermieden werden kann. Zudem kann der Antriebsstrang frühzeitig vor einem Eintritt der Änderung geregelt werden, wodurch der Antriebsstrang in einem optimalen Betriebspunkt betreibbar ist. Dadurch kann eine effizientere und verbesserte Regelung der Antriebsleistung und/oder des Antriebsstranges ermöglicht werden. Durch die vorausschauende, insbesondere automatische, Regelung der Antriebsleistung und/oder des Antriebsstranges kann zudem die Arbeitsbelastung des Bedieners der landwirtschaftlichen Arbeitsmaschine weiter reduziert werden, da dieser nicht mehr kontinuierlich seine Aufmerksamkeit auf den zukünftigen Verlauf der Fahrroute richten muss.

In einer bevorzugten Weiterbildung des Verfahrens wird die von der landwirtschaftlichen Arbeitsmaschine entlang einer zurückzulegenden Fahrroute benötigte Antriebsleistung und/oder Antriebsstranglast vorausschauend ermittelt. Dies hat den Vorteil, dass die Steuervorrichtung die Antriebsleistung und/oder den Antriebsstrang effizienter regeln kann, da der Zielwert, die benötigte Antriebsleistung und/oder eine Antriebsstranglast, bereits abrufbar bekannt sind und aufwendige Berechnungen entfallen können.

In einer weiteren Ausgestaltung des Verfahrens werden die Antriebsleistung und/oder die Antriebsstranglast der landwirtschaftlichen Arbeitsmaschine mittels einer Regelung des Antriebsmotors und des Antriebsstranges, insbesondere mittels einer vorherbestimmbaren Konfiguration des Antriebsstranges, geregelt. Der Antriebsstrang kann dabei sowohl jeweils regelbare mechanische, hydraulische und elektrische Antriebsstrangkomponenten, sowie deren Kombination wie in hybriden und/oder leistungsverzweigten Antriebssträngen aufweisen. Die Regelung der Antriebsleistung und/oder des Antriebsstranges erhöht die Flexibilität des Steuergerätes, da beispielsweise eine Regelung der benötigten Antriebsleistung und/oder des Antriebsstranges über die Drehzahl und/oder Drehmoment und/oder verfügbare Leistung der Antriebsmaschine und/oder eine entsprechende Antriebsstrangkonfiguration erfolgen kann. Besonders vorteilhaft ist jedoch, dass das Steuergerät die Antriebsleistung und/oder den Antriebsstrang vorausschauend regeln kann, so dass es beispielsweise bei Abruf einer benötigten, insbesondere höheren, Zugkraft zu keiner Zugkraftunterbrechung kommt.

Vorzugsweise wird mindestens eine Umweltbedingung und/oder die Fahrroute durch die landwirtschaftliche Arbeitsmaschine, und insbesondere durch die Steuervorrichtung ermittelt. Dies hat den Vorteil, dass die landwirtschaftliche Arbeitsmaschine unabhängig von einer Infrastruktur die benötigten Umweltbedingungen, beispielsweise die Topografie entlang einer Fahrroute, erfassen kann.

Erfindungsgemäß sind die Umweltbedingungen, Steuerparameter und/oder Fahrrouten, in einer zentralen Rechnereinheit abrufbar gespeichert und/oder werden durch die zentrale Rechnereinheit bereitgestellt. Neben der zentralen Rechnereinheit kann ein entsprechender Datenaustausch auch mit einer weiteren Arbeitsmaschine erfolgen. Dies hat den Vorteil, dass bereits erfasste Umweltbedingungen und/oder Fahrrouten erneut genutzt und geteilt werden können. Dadurch können bereits erfasste Umweltbedingungen und/oder Fahrrouten in eine aktuelle Ermittlung der benötigten Antriebsleistung und/oder Antriebsstrangkonfiguration entlang einer Fahrroute einfließen.

Weitere Merkmale und Vorteile der Erfindung ergeben sich aus der nachfolgenden Beschreibung von Ausführungsbeispielen unter Bezugnahme auf die beigefügten Figuren.

Es zeigen:
- Fig. 1:: eine schematische Darstellung einer landwirtschaftlichen Arbeitsmaschine mit einem Antriebsstrang;
- Fig. 2a:: eine schematische Darstellung einer landwirtschaftlichen Arbeitsmaschine auf einer ansteigenden Fahrroute;
- Fig. 2b:: eine schematische Darstellung der landwirtschaftlichen Arbeitsmaschine aus Fig. 2a mit verbesserter Regelung der Antriebsleistung und/oder des Antriebsstranges;
- Fig. 3a:: eine schematische Darstellung eines Höhenprofils eines Feldes;
- Fig. 3b:: eine schematische Darstellung eines Zugkraftbedarfs einer landwirtschaftlichen Arbeitsmaschine für das in Fig. 2a dargestellte Feld; und
- Fig. 4:: eine schematische Darstellung einer Fahrroute einer landwirtschaftlichen Arbeitsmaschine auf einem Feld mit kartiertem Zugkraftbedarf.

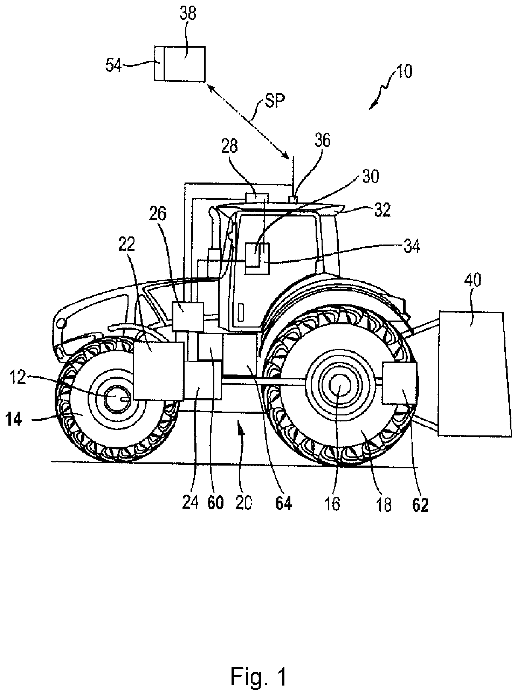

In Figur 1 ist als Beispiel für eine landwirtschaftliche Arbeitsmaschine 10 ein Traktor in einer schematischen Seitenansicht dargestellt. Eine landwirtschaftliche Arbeitsmaschine 10 kann jede Arbeitsmaschine 10 sein, welche zur Bearbeitung eines Feldes eingesetzt werden kann, wie ein Feldhäcksler, ein Mähdrescher oder ein Traktor mit oder ohne Arbeitsgerät oder Anhänger. Der Traktor weist an einer Vorderachse 12 befestigte Vorderräder 14 und an einer Hinterachse 16 befestigte Hinterräder 18 auf. Die landwirtschaftliche Arbeitsmaschine 10 in Form eines Traktors weist mindestens einen Antriebsmotor 22 sowie einen Antriebsstrang 20 mit einem Getriebe 24 auf. Der Antriebsmotor 22 kann beispielsweise ein Verbrennungsmotor sein. Über den Antriebsstrang 20 und/oder Antriebsmotor 22 kann regelbar die Antriebsleistung bereitgestellt werden, die beispielsweise für eine Feldbearbeitung und/oder eine Straßenfahrt der landwirtschaftlichen Arbeitsmaschine 10 benötigt wird, wobei ein vom Antriebsmotor 22 erzeugtes Drehmoment über den Antriebsstrang 20 auf die Hinterräder 18 übertragen werden kann, wodurch der Traktor (vorwärts oder rückwärts) über den Boden bewegbar ist. Dabei kann durch das Getriebe 24 eine schaltbare Getriebeübersetzung ermöglicht werden. Moderne Traktoren weisen Getriebe 24 mit manuell oder automatisiert, auch unter Last, verstellbaren Übersetzungen auf, wobei ein Getriebe 24 ein synchronisiertes, sowie teilweise oder vollständig unter Last schaltbare Stufengetriebe, als auch ein stufenlos, oder stufenlos leistungsverzweigtes Getriebe 24 sein kann. Neben der Hinterachse 16 kann alternativ oder zusätzlich die Vorderachse 12 über den Antriebsstrang 20 angetrieben werden. Die Vorderachse 12 und/oder die Hinterachse 16 können dabei anstelle der Räder 14,18 beispielsweise ein Raupenfahrwerk aufweisen.

Der Antriebsstrang 20 der landwirtschaftlichen Arbeitsmaschine 10 kann neben dem Antriebsmotor 22 und dem Getriebe 24 weitere Elemente aufweisen, insbesondere die Elemente, die in der Arbeitsmaschine 10 die Antriebsleistung generieren und bis auf die Straße übertragen. So kann der Antriebsstrang 20 beispielsweise die, insbesondere angetriebenen, Vorder- und/oder Hinterachsen 12,16 sowie die daran befestigten Räder 14,18 umfassen. Weiterhin kann der Antriebsstrang 20 Elemente zur Übertragung der Antriebsleistung des Antriebsmotor 22 umfassen, beispielsweise Kupplungen, Wellen, und/oder Neben- und Arbeitsantriebe (60) zur mechanischen, hydraulischen, pneumatischen und/oder elektrischen Leistungsübertragung aufweisen, die hier jedoch aus Gründen der Vereinfachung weder dargestellt noch näher erläutert sind. Ein Nebenabtrieb zur mechanischen Leistungsübertragung kann beispielsweise eine Zapfwelle (62) sein. Ebenso können Verzögerungselemente wie Bremsen, hydrodynamisch oder elektrodynamisch wirkender Retarder, und/oder mechanische, hydraulische, pneumatische, elektrische und/oder chemische Energiespeicher (64) von dem Antriebsstrang umfasst sein.

Zum Überwachen und/oder Steuern unterschiedlicher Funktionen der landwirtschaftlichen Arbeitsmaschine 10, insbesondere zur Steuerung und/oder Regelung des Antriebsmotors 22, insbesondere der Antriebsleisung des Antriebsmotors 22, und/oder des Antriebsstranges 20, weist die landwirtschaftliche Arbeitsmaschine 10 eine Steuervorrichtung 26 auf. Ein oder mehrere Elemente des Antriebstranges 20 können dabei durch die Steuervorrichtung 26 regelbar ausgebildet sein. Die Steuervorrichtung 26 kann, sofern diese nicht manuell durch einen Bediener eingestellt wird, den Antriebsstrang 20, beispielsweise das Getriebe 24, automatisiert regeln. Bei einer manuellen Einstellung der Antriebsstrangparameter, beispielsweise in Form einer bestimmten Getriebeübersetzung, durch den Bediener kann dieser üblicherweise auch eine Drehzahl und/oder Drehmoment des Antriebsmotors 22 direkt einstellen. Bei einer automatischen Regelung des Antriebsmotors 22 und/oder des Antriebsstranges 20 kann die Steuervorrichtung 26 zusätzlich auch die Regelung der Drehzahl und/oder des Drehmoments und/oder der Antriebsleistung des Antriebsmotors 22 vornehmen. Die Steuervorrichtung 26 kann dafür mit einer Reihe von Sensoren und Schnittstellen (nicht dargestellt) verbunden sein, welche beispielsweise Informationen zu einer Fahrpedalstellung, einer eingestellten zulässigen Antriebsmotordrückung, einer Motordrehzahl und/oder einer Antriebsstranglast bereitstellen.

Die landwirtschaftliche Arbeitsmaschine 10 weist zur Bestimmung ihrer aktuellen Position eine Positionsbestimmungsvorrichtung 28 auf. Die Positionsbestimmungsvorrichtung 28 ist dabei zur Bereitstellung und Übermittlung von, insbesondere aktuellen, Positionsangaben mit der Steuervorrichtung 26 verbunden. Des Weiteren kann die Steuervorrichtung 26 mit einer Anzeigevorrichtung 30 verbunden sein, wobei die Anzeigevorrichtung 30 beispielsweise in einer Fahrerkabine 32 der landwirtschaftlichen Arbeitsmaschine 10 angeordnet sein kann. Mittels der Anzeigevorrichtung 30 können einem Bediener der landwirtschaftlichen Arbeitsmaschine 10 beispielsweise Daten der Arbeitsmaschine, des Antriebsstranges und/oder eine abzufahrende Fahrroute angezeigt werden. Die landwirtschaftliche Arbeitsmaschine 10 kann zur Erstellung einer Fahrroute eine Navigationseinheit 34 aufweisen, welche eine Routenplanung umfassen kann. Die Navigationseinheit 34 kann beispielsweise in die Anzeigevorrichtung 30 integriert sein. Über eine Kommunikationseinheit 36 der Arbeitsmaschine 10 können Daten mit einer externen Rechnereinheit 38, insbesondere drahtlos, ausgetauscht werden. Dabei kann beispielsweise eine abzufahrende Fahrroute von der externen Rechnereinheit 38 an die Arbeitsmaschine 10 übermittelt werden. Zudem können aktuelle Daten der Arbeitsmaschine 10 über die Umweltbedingungen, beispielsweise über die Bodenbeschaffenheit, oder die Antriebsstranglast, an die Rechnereinheit 38 zur Speicherung und/oder Verarbeitung übermittelt werden.

An die landwirtschaftliche Arbeitsmaschine 10 sind unterschiedliche Arbeitsgeräte 40 anbaubar. Unter einem Arbeitsgerät 40 im Sinne der Erfindung kann dabei jedes Gerät verstanden werden, welches von einer landwirtschaftlichen Arbeitsmaschine 10 einsetzbar ist, und insbesondere zum Betrieb einen Anteil der Antriebsleistung der landwirtschaftlichen Arbeitsmaschine 10 benötigen kann. Ein Arbeitsgerät 40 kann beispielsweise ein Bodenbearbeitungsgerät wie ein Pflug, ein Düngerstreuer, oder ein Transportanhänger sein. Ein Arbeitsgerät 40 kann dabei dauerhaft oder teilweise im Bodeneingriff sein oder nicht. Ein Arbeitsgerät 40 in Form eines Düngerstreuers kann beispielsweise ohne Bodeneingriff betrieben werden, während ein Pflug beispielsweise beim Pflügen im Bodeneingriff und am Vorgewende sowie bei einer Straßenfahrt nicht im Bodeneingriff sein kann. Ein angebautes Arbeitsgerät 40 kann die Masse der landwirtschaftlichen Arbeitsmaschine 10 erhöhen und muss von dieser mitbewegt werden. Zudem kann, insbesondere bei einem Arbeitsgerät 40 im Bodeneingriff, der Zugkraftbedarf und/oder mechanischer und/oder hydraulischer und/oder elektrischer Leistungsbedarf der Arbeitsmaschine 10 deutlich erhöht werden, wodurch die Antriebsstranglast und die benötigte Antriebsleistung der landwirtschaftlichen Arbeitsmaschine 10 erhöht werden. Die benötigte Antriebsleistung kann dabei beispielsweise von einer Topografie der abzufahrenden Fahrroute abhängig sein, wobei beispielsweise bei einem steil ansteigenden Abschnitt der Fahrroute eine höhere Antriebsleistung und/oder Zugkraft benötigt wird als auf einem ebenen Abschnitt. Unter der Topografie ist dabei die Form der natürlichen Erdoberfläche mit ihren Höhen, Tiefen, Unregelmäßigkeiten und Formen zu verstehen. Des Weiteren können der mechanische und/oder hydraulische und/oder elektrische Leistungsbedarf aufgrund von variierenden Bodeneigenschaften und/oder anderen Arbeitsprozessparametern steigen. Um eine möglichst hohe Reduktion des Energieverbrauches zu erreichen, kann der Antriebsmotor 22 in einem verbrauchsoptimalen Betriebspunkt, bei einer möglichst hohen Drehmomentauslastung betrieben werden, so dass schon eine geringe Änderung der Antriebsleistung und/oder Antriebstranglast zu einer Änderung der Antriebsstrangparameter, beispielsweise einer Verstellung der Getriebeübersetzung des Getriebes 24 durch die Steuervorrichtung 26 führen kann. Dies kann beispielsweise zu unerwünschten Schaltvorgängen führen.

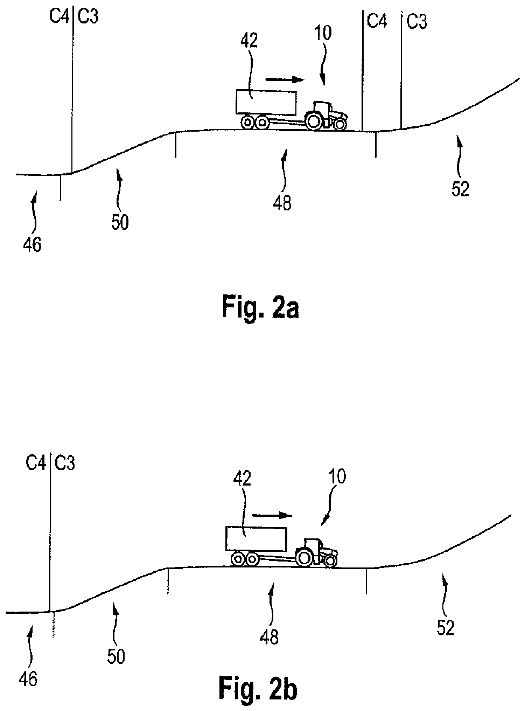

In Figur 2a ist eine landwirtschaftliche Arbeitsmaschine 10 in Form eines Traktors mit einem angehängten Transportanhänger 42 als Arbeitsgerät 40 dargestellt. Der Traktor ist beim Befahren einer Fahrroute 44 mit einer inhomogenen Steigung, beispielsweise bei Transportarbeiten auf der Straße, dargestellt. Die Fahrroute 44 weist einen ersten ebenen Abschnitt 46 und einen zweiten ebenen Abschnitt 48 auf, zwischen denen eine erste Steigung 50 angeordnet ist. An den zweiten ebenen Abschnitt 48 schließt in Fahrrichtung eine zweite Steigung 52 an. Befährt der Traktor beispielsweise im Automatikmodus mit einer automatischen Regelung der Antriebsleistung und/oder des Antriebsstranges 20 durch die Steuervorrichtung 26 bei Transportarbeiten den ersten Abschnitt 46, so wird bei Erreichen der ersten Steigung 50 die Steuervorrichtung 26 die Getriebeübersetzung des Getriebes 24 und/oder die Drehzahl und/oder Drehmoment und/oder Antriebsleistung des Antriebsmotors 22 an die steigende Antriebsstranglast anpassen. Wie in Figur 2a dargestellt, schaltet die Steuervorrichtung 26 zu Beginn der ersten Steigung 50 von der Getriebeübersetzung C4 auf die Getriebeübersetzung C3 herunter, um die Getriebeübersetzung an die Antriebsstranglast anzupassen, zumindest bis der zweite ebene Abschnitt 48 erreicht ist. Aufgrund der deutlich verringerten Steigung im zweiten Abschnitt 48 wird die Steuervorrichtung 26, beispielsweise zur Reduzierung des Kraftstoffverbrauches, von der Getriebeübersetzung C3 wieder heraufschalten in die Getriebeübersetzung C4, wobei die Schaltung in der Regel möglichst frühzeitig erfolgen soll. Der in Figur 2a dargestellte zweite, ebene Abschnitt 48 ist jedoch relativ kurz, so dass die zweite Steigung 52 bereits unmittelbar nach dem hochschalten des Getriebes 24 folgt. Die wieder ansteigende Antriebsstranglast führt zu einem erneuten herunterschalten des Getriebes 24 durch die Steuervorrichtung 26 in die Getriebeübersetzung C3, wodurch es zu einem sogenannten Schaltpendeln kommen kann, was insbesondere für teillastschaltbare Stufengetriebe, bei denen Gruppenschaltungen mit Zugkraftunterbrechungen erfolgen, unvorteilhaft ist. Weisen diese Getriebe eine Gruppenüberlappung auf, wird vorteilhafterweise vor der Steigung der mit einer Zugkraftunterbrechung verbundene Gruppenwechsel durchgeführt, um im Bereich der Steigung ausschließlich unter Last ohne Zugkraftunterbrechung schalten zu können. Dies steigert den Fahrkomfort und verringert den Geschwindigkeitsverlust.

Erfindungsgemäß erfolgt zur Vermeidung unnötiger Schaltvorgänge, und insbesondere einer Pendelschaltung, eine vorausschauende Regelung der Antriebsleistung und/oder des Antriebsstranges 20 in Abhängigkeit von Umweltbedingungen durch die Steuervorrichtung. Dabei kann die entlang einer Fahrroute 44 der landwirtschaftlichen Arbeitsmaschine 10 benötigte, insbesondere positionsabhängige, Antriebsleistung und/oder Antriebsstranglast im Voraus ermittelbar und von der Steuervorrichtung 26 nutzbar sein. Unter einer vorausschauenden Regelung ist dabei zu verstehen, dass die an einem bestimmten Punkt P der Fahrroute 44 benötigte Antriebsleistung und/oder Antriebsstrangkonfiguration so rechtzeitig von dem Steuergerät 26 geregelt wird, dass ein stabiler Betriebspunkt des Antriebsstranges 20, und insbesondere des Antriebsmotors 22, erreicht ist, wenn die Antriebsstranglast insbesondere steigt. Die Regelung der Antriebsleistung und/oder des Antriebsstranges kann dabei besonders durch ein schalten des Getriebes 24 erfolgen.

Die entlang der Fahrroute 44 benötigte Antriebsleistung der Arbeitsmaschine 10 kann dabei beispielsweise basierend auf einer entlang der Fahrroute 44 benötigten und/oder erwarteten Antriebsstranglast, einem Fahrwiderstand, einer Zugkraft und/oder einer Nebenabtriebslast der landwirtschaftlichen Arbeitsmaschine 10 ermittelbar sein. Die Antriebsstranglast kann dabei alle in dem Antriebsstrang 20 wirkenden Lasten umfassen. Ein Teil der Antriebsstranglast kann beispielsweise ein Fahrwiderstand der landwirtschaftlichen Arbeitsmaschine 10 sein, welcher die Summe der Widerstände umfasst, welche die Arbeitsmaschine 10 überwinden muss, um mit einer konstanten oder beschleunigten Geschwindigkeit auf einer horizontalen oder geneigten Fahrroute 44 zu fahren. Die benötigte Zugkraft der Arbeitsmaschine 10 entlang einer Fahrroute 44 kann positionsabhängig ermittelt werden und beispielsweise auf einem entlang der Fahrroute 44 zu verwendenden Arbeitsgerät 40 basieren. Hierbei kann beispielsweise ein Arbeitsgerät 40, welches bei der Bearbeitung eines Feldes im Bodeneingriff ist, zu einem höheren Zugkraftbedarf führen als ein Anhänger, welcher auf einer ebenen Straße zu ziehen ist. Von einem entlang der Fahrroute 44 zu verwendendem Arbeitsgerät 40 kann ebenfalls die Nebenabtriebslast abhängen. Die Nebenabtriebslast ist die Last, die benötigt wird, um beispielsweise mittels eines mechanischen Antriebes wie der Zapfwelle 62 und/oder eines hydraulischen und/oder eines elektrischen Antriebes ein Arbeitsgerät 40 anzutreiben. Dadurch ist bei einer Benutzung des Arbeitsgerätes 40 die benötigte Nebenabtriebslast größer als beispielsweise bei einer Straßenfahrt, bei der das Arbeitsgerät 40 inaktiv ist.

Die Regelung der Antriebsleistung kann hierbei mittels einer Regelung des Antriebsstranges 20, insbesondere einer Regelung des Getriebes 24, und/oder des Antriebsmotors 22 durch das Steuergerät 26 erfolgen. Das Steuergerät 26 kann beispielsweise das Getriebe 24 und insbesondere die Getriebeübersetzungen C_{3,4} derart vorausschauend regeln, dass die benötigte Antriebsleistung und/oder Antriebsstrangkonfiguration spätestens dann verfügbar ist, wenn aufgrund veränderter Umweltbedingungen eine höhere Antriebsleistung und/oder Antriebsmoment und/oder Antriebsdrehzahl benötigt wird. Das Steuergerät 26 kann zur vorausschauenden Bereitstellung einer hinreichenden Antriebsleistung und/oder Antriebsmoment und/oder Antriebsdrehzahl zusätzlich oder alternativ den Antriebsmotor 22 und/oder weitere Elemente des Antriebsstranges 20 entsprechend regeln. So kann das Steuergerät 26 der in Figur 2b dargestellten landwirtschaftlichen Arbeitsmaschine 10 einen Wechsel in die Getriebeübersetzung C₃ bereits vorausschauend frühzeitig noch in dem ersten ebenen Abschnitt 46 vor Beginn der ersten Steigung 50 vornehmen. Nach Erreichen des zweiten ebenen Abschnittes 48 kann das Steuergerät 26 aufgrund der bekannten Umweltbedingungen, insbesondere das unmittelbare Anschließen der zweiten Steigung 52 an den zweiten ebenen Abschnitt 48, ein Hochschalten in die Getriebeübersetzung C₄ vermeiden, da das Steuergerät 26 bereits den für die zweite Steigung 52 benötigten Bedarf der Antriebsleistung und/oder die Antriebsstrangkonfiguration kennt und vorausschauend eine entsprechende Regelung vornehmen kann, wobei in dem gezeigten Beispiel die benötigte Getriebeübersetzung C₃ bereits gewählt ist, so dass kein Schalten des Getriebes 24 nötig ist. Dadurch kann durch das vorausschauende Regeln der Antriebsleistung und/oder des Antriebsstranges 20 ein unnötiges Hochschalten und damit ein Pendelschalten vermieden werden.

Durch die vorausschauende Bereitstellung einer benötigten Antriebsleistung und/oder Antriebsstrangkonfiguration kann beispielsweise bei einem schnellen Anstieg der benötigten Antriebsleistung und/oder Antriebsstranglast ein verspätetes Schalten der Getriebeübersetzung und ein Abwürgen des Antriebsmotors 22 vermieden werden. Zudem kann eine sogenannte Pendelschaltung des Getriebes 24 vermieden werden, bei der wiederholt die Getriebeübersetzung aufgrund schnell wechselnder Umweltbedingungen gewechselt wird. Besonders bei einem teillastschaltbaren Getriebe 24, welches eine Gruppenüberdeckung der einzelnen Getriebeübersetzungen aufweist, kann vorausschauend ein Gruppenwechsel mit Zugkraftunterbrechung ausgeführt werden, so dass bei Abruf der benötigten Antriebsleistung und/oder Antriebsstranglast alle weiteren Schaltungen der Getriebeübersetzung innerhalb einer Gruppe ohne Zugkraftunterbrechung erfolgen können. Dadurch kann die Funktion der Steuervorrichtung 26 verbessert werden. Zudem kann, insbesondere bei rapiden Laständerungen der Energieverbrauch reduziert werden, sowie der Fahrkomfort und die Bedienbarkeit verbessert werden.

Die vorausschauende Regelung der Antriebsleistung und/oder des Antriebsstranges entlang einer Fahrroute 44 erfolgt erfindungsgemäß in Abhängigkeit von den Umweltbedingungen. Vor einer Bestimmung relevanter Umweltbedingungen kann eine Fahrroute ermittelt werden, welche die landwirtschaftliche Arbeitsmaschine 10 abfahren soll. Die Fahrroute 44 kann beispielsweise eine Fahrt entlang einer Straße zu und/oder von einem Feld umfassen, welches bearbeitet werden soll. Zudem kann die Fahrroute 44 der landwirtschaftlichen Arbeitsmaschine 10 die auf einem Feld zur Bearbeitung abzufahrenden Route umfassen. Zur Erstellung der Fahrroute 44 kann die landwirtschaftliche Arbeitsmaschine 10 eine Navigationseinheit 34 mit einem Routenplanungssystem aufweisen, welche mit der Steuervorrichtung 26 zum Datenaustausch verbunden ist. Die Fahrroute 44 kann auch durch eine zentrale Rechnereinheit 38 bereitgestellt werden, mit der die Steuervorrichtung 26 mittels der Kommunikationseinheit 36 Daten austauschen kann.

Entlang der Fahrroute 44 kann die benötigte Antriebsleistung und/oder Antriebsstranglast in Abhängigkeit der Umweltbedingungen variieren. Unter Umweltbedingungen sind dabei alle den Antriebsleistungsbedarf der landwirtschaftlichen Arbeitsmaschine 10 beeinflussenden Steuerparameter, insbesondere entlang der Fahrroute, zu verstehen. Die Umweltbedingungen können dabei routenspezifische und/oder maschinenspezifische Steuerparameter SP sein. Routenspezifischen Steuerparameter SP können die Eigenschaften der Fahrroute 44 beschreiben, die einen Einfluss auf die benötigte Antriebsleistung und/oder Antriebsstranglast haben. Beispielsweise kann eine Topografie der Fahrroute 44 ein routenspezifischer Steuerparameter SP sein, wobei sowohl Steigungen, Gefälle als auch Kurven in der Fahrroute 44 berücksichtigt werden können. Die Topografie der Fahrroute 44 kann beispielsweise als ein routenspezifischer Steuerparameter SP in Form eines Höhenprofils oder eines Reliefs der zu befahrenden Fahrroute 44 erfasst sein, wobei die Fahrroute 44 eine zu befahrende Straße und/oder ein zu befahrendes Feld umfassen kann. Ein routenspezifischer Steuerparameter SP kann beispielsweise auch eine Bodenbeschaffenheit entlang der Fahrroute 44 sein, welche einen Einfluss auf das Traktionsverhalten der Arbeitsmaschine 10 und damit die benötigte Antriebsstrangiast und Antriebsleistung ausübt. Eine zur Bearbeitung des Feldes benötigte Zugkraft kann ein weiterer routenspezifischer Steuerparameter SP sein, wobei die Zugkraft entlang der Fahrroute auf dem Feld aufgrund der Inhomogenität des Bodens variieren kann, was sich beispielsweise besonders beim Pflügen des Feldes auf die benötigte Zugkraft auswirkt. Besonders bei einem zu bearbeitenden Feld kann der Bewuchszustand des Feldes als routenspezifischer Steuerparameter berücksichtigt werden, da der Bewuchszustand, also beispielsweise ob das Feld Grünland ist, gegrubbert oder gepflügt ist, Einfluss auf den Zugkraftbedarf insbesondere eines Arbeitsgerätes und auf das Traktionsverhalten einer Arbeitsmaschine hat. Durch den Bewuchszustand als routenspezifischer Steuerparameter kann beispielsweise ein, insbesondere von der letzten Bearbeitung des Feldes, bekannter Zugkraftbedarf an die aktuelle Situation angepasst werden. Für eine Bestimmung der benötigten Antriebsleistung und/oder Antriebsstranglast können beispielsweise auch entlang der Fahrroute verfügbare Wetterdaten als routenspezifische Steuerparameter SP verwendet werden, da durch die Witterung beispielsweise der Zugkraftbedarf und/oder das Traktionsverhalten beeinflusst werden können, da diese bei trockenem oder nassem Boden unterschiedlich sein können.

Neben den routenspezifischen Steuerparametern SP können auch maschinenspezifische Steuerparameter SP die benötigte Antriebsleistung und/oder Antriebsstranglast beeinflussen. So kann beispielsweise die benötigte Antriebsleistung und/oder Antriebsstranglast in Abhängigkeit des verwendeten Arbeitsgerätes 40 variieren, wobei beispielsweise das Gewicht des Arbeitsgerätes 40, insbesondere einzeln oder bei dem Gesamtgewicht der Arbeitsmaschine 10, als maschinenspezifischer Steuerparameter SP berücksichtigt werden kann. Bei einem Arbeitsgerät 40, welches durch einen Nebenabtrieb der Arbeitsmaschine 10 zumindest zeitweise antreibbar ist, kann der von dem Arbeitsgerät 40 benötigte Leistungsbedarf entlang der Fahrroute als maschinenspezifischer Steuerparameter SP berücksichtigt werden. Weitere maschinenspezifische Steuerparameter SP können beispielsweise der Reifenluftdruck und/oder eine Gewichtsverteilung oder Ballastierung der Arbeitsmaschine 10, insbesondere mit angebautem Arbeitsgerät 40, sein. Eine aktuelle Gewichtsverteilung der Arbeitsmaschine 10 kann dabei beispielsweise vor einem Arbeitsbeginn von der Steuervorrichtung 26 basierend auf der abzufahrenden Fahrroute sowie verfügbaren Steuerparametern, beispielsweise anhand des Höhenprofils und des Zugkraftbedarfs, überprüft werden. Hierbei kann zum Verbessern der Gewichtsverteilung einem Bediener eine verbesserte Ballastierung der Arbeitsmaschine 10 angezeigt werden.

Die Steuerparameter SP und/oder eine Fahrroute 44 können durch die landwirtschaftliche Arbeitsmaschine 10 erstellt und/oder der Arbeitsmaschine 10 von einer zentralen Rechnereinheit 38 und/oder einer weiteren Arbeitsmaschine 10 über die Kommunikationseinheit 36 bereitgestellt werden. Beispielsweise kann eine landwirtschaftliche Arbeitsmaschine 10 entlang einer Fahrroute 44, insbesondere auf einem Feld, Steuerparameter SP in Form eines Höhenprofils und/oder eines positionsbezogenen Zugkraftbedarfs entlang der Fahrroute 44 ermitteln, wobei diese Steuerparameter an die zentrale Rechnereinheit 38 und/oder beispielsweise direkt an eine nachfolgende Arbeitsmaschine (nicht dargestellt) übermittebar sind. Der routenspezifische Steuerparameter in Form des Höhenprofils kann dabei beispielsweise mittels der Positionsbestimmungseinheit 28, welche ein satellitenbasiertes Positionssystem sein kann, bestimmt werden. Der positionsbezogen benötigte Zugkraftbedarf kann beim Arbeiten auf dem Feld beispielsweise mittels eines Zugkraftsensors an einer arbeitsmaschinenseitigen Aufnahme des Arbeitsgerätes 40 oder mittels einer an einem Fahrwerk, beispielsweise der Hinterachse 16, der Arbeitsmaschine 10 angebrachten Sensorik gemessen und in Verbindung mit der jeweiligen Position der Arbeitsmaschine 10 erfasst werden.

Die zentrale Rechnereinheit 38 kann dabei Daten, insbesondere eine Fahrroute 44 und/oder Steuerparameter, von einer oder mehreren Arbeitsmaschinen 10 empfangen, abrufbar speichern, und/oder verarbeiten. Zum Speichern einer oder mehrerer Fahrrouten 44 und/oder von Steuerparametern kann die Rechnereinheit 38 und/oder die Arbeitsmaschine 10 eine entsprechend ausgebildete Speichervorrichtung 54 aufweisen. Durch die von einer Arbeitsmaschine 10 generierten Steuerparameter, wie beispielsweise der Zugkraftbedarf bei einem Arbeitsgerät 40 mit Bodeneingriff wie ein Pflug, können die beispielsweise bei einem Vorgewende auftretenden starken Veränderungen in der Zugkraft aufgrund des Anhebens und/oder Absenkens des Arbeitsgerätes, sehr genau erfasst werden, wodurch eine effizientere Regelung der Antriebsleistung der Arbeitsmaschine 10 ermöglicht werden kann. Die zentrale Rechnereinheit 38 kann die empfangenen Daten für ein bestimmtes Feld, beispielsweise eine Fahrroute und/oder Steuerparameter, in einer sogenannten Schlagkartei zusammenfassen und für jede Arbeitsmaschine 10 abrufbar speichern. Dadurch können einer landwirtschaftlichen Arbeitsmaschine 10 und ihrer Steuervorrichtung 26 bereits bei der Planung einer Bearbeitung eines Feldes Informationen über eine entsprechende Fahrroute 44 sowie zugehörige Steuerparameter bereitgestellt werden. Diese Informationen können beispielsweise durch die Steuervorrichtung 26 aktualisiert werden, beispielsweise aufgrund neuerer Umweltbedingungen. Dadurch kann die Steuervorrichtung 26 für die geplante Fahrroute 44 die benötigte Antriebsleistung und/oder Antriebsstranglast entlang der Fahrroute 44 ermitteln und dadurch vorausschauend die Antriebsleistung und/oder den Antriebsstrang regeln.

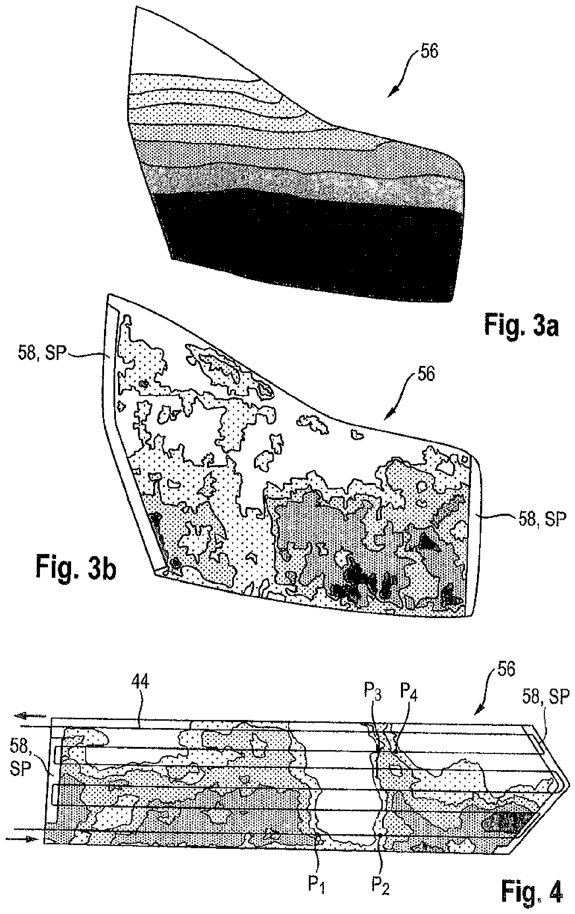

In Figur 3a ist ein zu bearbeitendes Feld 56 dargestellt, wobei die Topografie des Feldes 56 als routenabhängiger Steuerparameter grafisch durch einen Farbverlauf dargestellt ist, wobei die Oberfläche des Feldes 56 von dem hellen Bereich zu dem dunkleren Bereich hin ansteigt. Zusammen mit einer geplanten Fahrroute (nicht dargestellt), kann so ein Höhenprofil für die Fahrroute 44 als Steuerparameter ermittelt werden. Neben dem Höhenprofil sind jedoch bei der Ermittlung der benötigten Antriebsleistung entlang der Fahrroute auch die Bodenbeschaffenheit des Feldes 56 entlang der Fahrroute zu berücksichtigen. Der Boden hat dabei sowohl einen Einfluss auf das Traktionsverhalten der landwirtschaftlichen Arbeitsmaschine 10 und damit auf die zu überwindenden Fahrwiderstände und erreichbaren Zugkräfte, als auch auf den Zugkraftbedarf eines Arbeitsgerätes 40, welches mit dem Boden im Eingriff steht. In Abhängigkeit von der Bodenbeschaffenheit des Feldes 56 kann ein Zugkraftbedarf auf dem Feld ermittelt und kartiert werden. Ein kartierter Zugkraftbedarf für das in Figur 3a gezeigte Feld 56 ist in Figur 3b dargestellt. Dabei ist der Zugkraftbedarf umso größer, je dunkler ein Bereich dargestellt ist, wobei deutlich wird, dass der Zugkraftbedarf bei der Bodenbearbeitung neben dem Höhenprofil vor allem auf der Bodenbeschaffenheit des Feldes 56 beruht. In dem in Figur 3b dargestellten Feld 56 ist an zwei gegenüberliegenden Seiten jeweils ein ungefärbter Streifen parallel zur benachbarten Außenkante des Feldes 56 dargestellt. Diese Bereiche steilen das sogenannte Vorgewende 58 dar, in dem die Fahrroute der Arbeitsmaschine 10 sich üblicherweise in die entgegengesetzte Richtung ändert, wobei die landwirtschaftliche Arbeitsmaschine 10 wendet um in entgegengesetzter Richtung die Bearbeitung des Feldes 56 fortzusetzen. Dabei kann in dem Bereich des Vorgewendes ein Arbeitsgerät 40, welches zur Bearbeitung im Bodeneingriff ist, angehoben werden und nach einer Richtungsänderung der Arbeitsmaschine 10 wieder abgesenkt werden. Bei dem Anheben und Absenken des Arbeitsgerätes 40 kann es zu einer sprunghaften Veränderung der benötigten Zugkraft und damit der Antriebsleistung und/oder Antriebsstranglast der Arbeitsmaschine 10 kommen. Besonders ist hierbei der sprunghafte Anstieg der benötigten Zugkraft und Antriebsleistung nach einem Absenken und Eingreifen des Arbeitsgerätes 40 in den Boden zu beachten, da es zu einem Abwürgen des Antriebsmotors 22 kommen kann. Aufgrund der vorausschauenden Regelung der Antriebsleistung durch das Steuergerät 26 kann jedoch rechtzeitig vor dem Eingriff in den Boden die benötigte Antriebsleistung durch entsprechende Regelung des Antriebstranges 20 bereitgestellt werden.

Figur 4 zeigt ein weiteres Beispiel für ein Feld 56 mit inhomogener Bodenbeschaffenheit, die zu dem grafisch dargestellten Zugkraftbedarf führen, wobei der Zugkraftbedarf umso größer ist, je dunkler ein Bereich dargestellt ist. Zur Bearbeitung des Feldes 56 ist eine durch eine Arbeitsmaschine 10 abzufahrende Fahrroute 44 auf dem Feld 56 dargestellt. Entlang der Fahrroute 44 kann der Zugkraftbedarf und damit die benötigte Antriebsleistung der Arbeitsmaschine 10 unterschiedlich stark schwanken. Die benötigte Zugkraft auf dem Feld 56 und insbesondere entlang der Fahrroute 44 kann der Steuervorrichtung 26 beispielsweise als Steuerparameter von der zentralen Rechnereinheit 38 übermittelt werden. Die zentrale Rechnereinheit 38 kann die Fahrroute und/oder die Steuerparameter, welche beispielsweise bei einer vorherigen Bearbeitung des Feldes 56 ermittelt wurden, in einer Schlagkartei abrufbar gespeichert haben. Es ist auch denkbar, dass die Arbeitsmaschine 10 die Fahrroute 44 selbstständig ermittelt und lediglich den Steuerparameter über den Zugkraftbedarf auf dem Feld 56 zur Ermittlung und Regelung der benötigten Antriebsleistung und/oder des Antriebsstranges von der zentralen Rechnereinheit erhält. Entlang der in Pfeilrichtung befahrenen Fahrroute 44 kommt es beispielsweise bei dem Punkt P₁ zu einem sprunghaften Abfall der benötigten Zugkraft, wobei an dem darauf folgenden Punkt P₂ der Zugkraftbedarf wieder sprunghaft ansteigt. Abhängig von der Entfernung zwischen den Veränderungen in der benötigten Zugkraft kann die Steuervorrichtung 26 die Antriebsleistung regeln. So kann beispielsweise bei einem kurzen Abstand die Einstellung des Antriebstranges 20 und insbesondere des Getriebes 24 unverändert bleiben, da unmittelbar darauf folgend wieder eine höhere Zugkraft benötigt wird. Dadurch kann unnötiges Pendelschalten vermieden werden. Andererseits kann die Steuervorrichtung 26 bei einem hinreichend großen Abstand zwischen den Veränderungen in der benötigten Antriebsleistung beispielsweise das Getriebe 24 regeln, und beispielsweise eine höhere Getriebeübersetzung wählen. Ein erneutes Regeln zur Bereitstellung der höheren Antriebsleistung und/oder Antriebsstranglast kann so frühzeitig erfolgen, dass ein stabiler Betriebspunkt einstellbar ist, bevor die erhöhte Antriebsleistung und/oder Antriebsstranglast benötigt wird.

Bei Erreichen des Vorgewendes 58 kann das im Bodeneingriff befindliche Arbeitsgerät 40 angehoben und aus dem Bodeneingriff gebracht werden. Nach einer Wende der Arbeitsmaschine 10 im Vorgewende 58 kommt es bei dem Absenken des Arbeitsgerätes 40 wieder zu einem sprunghaften Anstieg der benötigten Zugkraft. Hierbei kann die Steuervorrichtung 26 beispielsweise je nach der Verweildauer der Arbeitsmaschine 10 am Vorgewende die Antriebsleistung und/oder den Antriebsstrang 20 regeln, insbesondere bevor das Arbeitsgerät 40 wieder abgesenkt und in Bodeneingriff gebracht wird. Bei dem Punkt P₃ kommt es ebenfalls zu einem sprunghaften Anstieg der benötigten Zugkraft, welche bis zu Punkt P₄ benötigt wird. Aufgrund der Nähe von Punkt P₃ zu Punkt P₄ kann das Steuergerät 26 eine Regelung der Antriebsleistung und/oder des Antriebsstranges 20 unterlassen, falls die aktuelle Antriebsleistung ausreichend groß ist, um ohne ein Abwürgen oder stärkeres Drücken des Antriebsmotors 22 den Punkt P₄ zu erreichen, ab dem nur eine geringere Zugkraft benötigt wird. Denkbar ist auch, dass die Steuervorrichtung 26 das Getriebe 24 und die Getriebeübersetzung unverändert beibehält und lediglich die Drehzahl und/oder das Antriebsmoment und/oder die Antriebsleistung des Antriebsmotors 22 und/oder weiterer Energiewandler rechtzeitig anhebt.

### Bezugszeichenliste

- 10: landwirtschaftliche Arbeitsmaschine
- 12: Vorderachse
- 14: Vorderrad
- 16: Hinterachse
- 18: Hinterrad
- 20: Antriebsstrang
- 22: Antriebsmotor
- 24: Getriebe
- 26: Steuervorrichtung
- 28: Positionsbestimmungsvorrichtung
- 30: Anzeigevorrichtung
- 32: Fahrerkabine
- 34: Navigationseinheit
- 36: Kommunikationseinheit
- 38: Rechnereinheit
- 40: Arbeitsgerät
- 42: Transportanhänger
- 44: Fahrroute
- 46: erster ebener Abschnitt
- 48: zweiter ebener Abschnitt
- 50: erste Steigung
- 52: zweite Steigung
- 54: Speichervorrichtung
- 56: Feld
- 58: Vorgewende
- 60: Nebenabtrieb
- 62: Zapfwelle
- 64: Energiespeicher

- C_{3,4}: Getriebeübersetzung
- P_{1,2,3,4}: Punkt entlang der Fahrroute
- SP: Steuerparameter

## Patentansprüche

1. Als Traktor ausgeführte landwirtschaftliche Arbeitsmaschine mit mindestens einem Antriebsmotor (22), einem ein Getriebe (24) umfassenden Antriebsstrang (20), sowie einer Steuervorrichtung (26) zur Steuerung und/oder Regelung des Antriebsmotors (22) und des das Getriebe (24) umfassenden Antriebsstranges (20), und einer Positionsbestimmungsvorrichtung (28) wobei die Steuervorrichtung (26) derart ausgebildet und eingerichtet ist, dass eine Regelung des Antriebsmotors (22) insbesondere einer Antriebsleistung des Antriebsmotors (22), und des das Getriebe (24) umfassenden Antriebsstranges (20) vorausschauend in Abhängigkeit von Umweltbedingungen erfolgt, und wobei eine mit der Steuervorrichtung (26) verbundene Kommunikationseinheit (36) zum Austausch von Daten, mit einer zentralen Rechnereinheit (38) vorgesehen ist, wobei die Daten Umweltbedingungen, Steuerparametern (SF)) und/oder Fahrrouten (44), umfassen, **dadurch gekennzeichnet, dass**
die Umweltbedingung ein routenspezifischer Steuerparameter (SP) in Form einer Topografie, insbesondere eines Höhenprofils, und/oder der Bodenbeschaffenheit entlang der Fahrroute (44) und die Umweltbedingung ein maschinenspezifischer Steuerparameter (SF)) in Form eines zumindest zeitweisen Leistungsbedarfs mindestens einer Komponente des Antriebsstranges (20), nämlich des Getriebes (24), eines Nebenabtriebes und eines Arbeitsgerätes (40) der landwirtschaftlichen Arbeitsmaschine (10) sind.

2. Landwirtschaftliche Arbeitsmaschine nach Anspruch 1, **dadurch gekennzeichnet, dass** die Steuervorrichtung derart ausgebildet und eingerichtet ist, dass eine von der landwirtschaftlichen Arbeitsmaschine (10) entlang einer zurückzulegenden Fahrroute (44) benötigte Antriebsleistung des Antriebsmotors (22) und/oder Antriebsstranglast vorausschauend ermittelbar sind.

3. Landwirtschaftliche Arbeitsmaschine nach Anspruch 2, **dadurch gekennzeichnet, dass** die Antriebsleistung und/oder die Antriebsstranglast der landwirtschaftlichen Arbeitsmaschine (10) mittels einer Regelung des Antriebsmotors (22) und/oder des Antriebsstranges (20), insbesondere mittels einer vorherbestimmbaren Konfiguration des Antriebsstranges (20), regelbar sind.

4. Landwirtschaftliche Arbeitsmaschine nach einem der Ansprüche 2 oder 3, **dadurch gekennzeichnet, dass** Umweltbedingungen Steuerparameter (SF)) sind, welche die benötigte Antriebsleistung und/oder Antriebsstranglast der landwirtschaftlichen Arbeitsmaschine (1 0), insbesondere entlang einer Fahrroute (44) der landwirtschaftlichen Arbeitsmaschine (10), beeinflussen.

5. Landwirtschaftliche Arbeitsmaschine nach einem der vorherigen Ansprüche, **dadurch gekennzeichnet, dass** mindestens eine Umweltbedingung durch die landwirtschaftliche Arbeitsmaschine (10), und insbesondere durch die Steuervorrichtung (26), ermittelbar ist.

6. Landwirtschaftliche Arbeitsmaschine nach einem der vorherigen Ansprüche, **dadurch gekennzeichnet, dass** eine mit der Steuervorrichtung (26) zum Datenaustausch verbundene Navigationseinheit (34) mit einem Routenplanungssystem zur Erstellung der Fahrroute (44) vorgesehen ist.

7. Verfahren zur vorausschauenden Regelung einer Antriebsleistung und/oder eines Antriebsstranges (20) für eine als Traktor ausgeführte landwirtschaftliche Arbeitsmaschine (10), welche mindestens einen Antriebsmotor (22), einen ein Getriebe (24) umfassenden Antriebsstrang (20), sowie eine Steuervorrichtung (26) zur Steuerung und/oder Regelung des Antriebsmotors (22) und des das Getriebe (24) umfassenden Antriebsstranges (20), und eine Positionsbestimmungsvorrichtung (28) aufweist, wobei der Antriebsmotor (22), insbesondere eine Antriebsleistung des Antriebsmotors (22), und der das Getriebe (24) umfassenden Antriebsstrang (20) durch die Steuervorrichtung (26) vorausschauend in Abhängigkeit von Umweltbedingungen geregelt werden, und wobei die Umweltbedingungen, Steuerparameter (SP) und/oder Fahrrouten (44), in einer zentralen Rechnereinheit (38) abrufbar gespeichert sind und/oder durch die zentrale Rechnereinheit (38) bereitgestellt werden, wobei eine mit der Steuervorrichtung (26) verbundene Kommunikationseinheit (36) zum Austausch der Daten Umweltbedingungen, Steuerparametern (SF)) und/oder Fahrrouten (44), mit der zentralen Recheneinheit vorgesehen ist, **dadurch gekennzeichnet, dass**
die Umweltbedingung ein routenspezifischer Steuerparameter (SP) in Form einer Topografie, insbesondere eines Höhenprofils, und/oder der Bodenbeschaffenheit entlang der Fahrroute (44) und die Umweltbedingung ein maschinenspezifischer Steuerparameter (SF)) in Form eines zumindest zeitweisen Leistungsbedarfs mindestens einer Komponente des Antriebsstranges (20), nämlich des Getriebes (24), eines Nebenabtriebes und eines Arbeitsgerätes (40) der landwirtschaftlichen Arbeitsmaschine (10) sind.

8. Verfahren nach Anspruch 7, **dadurch gekennzeichnet, dass** die von der landwirtschaftlichen Arbeitsmaschine (10) entlang einer zurückzulegenden Fahrroute (44) benötigte Antriebsleistung und/oder Antriebsstranglast vorausschauend ermittelt werden.

9. Verfahren nach Anspruch 8, **dadurch gekennzeichnet, dass** die Antriebsleistung und/oder die Antriebsstranglast der landwirtschaftlichen Arbeitsmaschine (10) mittels einer Regelung des Antriebsmotors (22) und/oder des Antriebsstranges (20), insbesondere mittels einer vorherbestimmbaren Konfiguration des Antriebsstranges (20), geregelt werden.

10. Verfahren nach Anspruch 7 oder 9, **dadurch gekennzeichnet, dass** mindestens eine Umweltbedingung und/oder die Fahrroute (44) durch die landwirtschaftliche Arbeitsmaschine (1 0), und insbesondere durch die Steuervorrichtung (26) ermittelt wird.

## Claims

1. An agricultural working machine in the form of a tractor having at least one drive motor (22), a drive train (20) including a transmission (24) and a control device (26) for open-loop and/or closed-loop control of the drive motor (22) and the drive train (20) including the transmission (24), and a position determining device (28), wherein the control device (26) is so designed and adapted that closed-loop control of the drive motor (22), in particular a drive power of the drive motor (22), and the drive train (20) including the transmission (24), is effected proactively in dependence on environmental conditions, and wherein there is provided a communication unit (36) connected to the control device (26) for the exchange of data with a central computer unit (38), wherein the data include environmental conditions, control parameters (SP) and/or travel routes (44),
**characterised in that**
the environmental condition is a route-specific control parameter (SP) in the form of a topography, in particular a height profile, and/or the ground conditions along the travel route (44) and the environmental condition is a machine-specific control parameter (SP) in the form of an at least temporary power requirement of at least one component of the drive train (20), namely the transmission (24), a power take-off and a working implement (40) of the agricultural working machine (10).

2. An agricultural working machine according to claim 1 **characterised in that** the control device is so designed and adapted that a drive power of the drive motor (22) required by the agricultural working machine (10) along a travel route (44) to be covered and/or drive train load can be proactively ascertained.

3. An agricultural working machine according to claim 2 **characterised in that** the drive power and/or the drive train load of the agricultural working machine (10) are controllable by means of a closed-loop control of the drive motor (22) and/or the drive train (20), in particular by means of a predeterminable configuration of the drive train (20).

4. An agricultural working machine according to one of claims 2 and 3 **characterised in that** environmental conditions are control parameters (SP) which influence the required drive power and/or drive train load of the agricultural working machine (10), in particular along a travel route (44) of the agricultural working machine (20).

5. An agricultural working machine according to one of the preceding claims **characterised in that** at least one environmental condition can be ascertained by the agricultural working machine (10) and in particular by the control device (26).

6. An agricultural working machine according to one of the preceding claims **characterised in that** there is provided a navigation unit (34) connected to the control device (26) for data exchange, having a route planning system for setting out the travel route (44).

7. A method of proactive closed-loop control of a drive power and/or a drive train (20) for an agricultural working machine (10) in the form of a tractor, which has at least one drive motor (22), a drive train (20) including a transmission (24) and a control device (26) for open-loop and/or closed-loop control of the drive motor (22) and the drive train (20) including the transmission (24), and a position determining device (28), wherein the drive motor (22), in particular a drive power of the drive motor (22), and the drive train (20) including the transmission (24) are subject to closed-loop control by the control device (26) proactively in dependence on environmental conditions, and wherein the environmental conditions, control parameters (SP) and/or travel routes (44) are retrievably stored in a central computer unit (38) and/or are provided by the central computer unit (38), wherein there is provided a communication unit (36) connected to the control device (26) for the exchange of the data with the central computer unit (38), the data comprising environmental conditions, control parameters (SP) and/or travel routes (44),
**characterised in that**
the environmental condition is a route-specific control parameter (SP) in the form of a topography, in particular a height profile and/or the ground conditions along the travel route (44), and the environmental condition is a machine-specific control parameter (SP) in the form of an at least temporary power requirement of at least one component of the drive train (20), namely the transmission (24), a power take-off and a working implement (40) of the agricultural working machine (10).

8. A method according to claim 7 **characterised in that** the drive power required by the agricultural working machine (10) along a travel route (44) to be covered and/or the drive train load are proactively ascertained.

9. A method according to claim 8 **characterised in that** the drive power and/or the drive train load of the agricultural working machine (10) are subject to closed-loop control by means of a closed-loop control of the drive motor (22) and/or the drive train (20), in particular by means of a predeterminable configuration of the drive train (20).

10. A method according to claim 7 or claim 9 **characterised in that** at least one environmental condition and/or the travel route (44) is ascertained by the agricultural working machine (10) and in particular by the control device (26).

## Revendications

1. Machine de travail agricole conformée en tracteur comprenant au moins un moteur d'entraînement (22), une chaîne de transmission (20) incluant une transmission (24) ainsi qu'un dispositif de commande (26) pour commander et/ou réguler le moteur d'entraînement (22) et la chaîne de transmission (20) incluant la transmission (24), et un dispositif de détermination de position (28), le dispositif de commande (26) étant conçu et agencé de façon qu'une régulation du moteur d'entraînement (22), en particulier d'une puissance d'entraînement du moteur d'entraînement (22) et de la chaîne de transmission (20) incluant la transmission (24), s'effectue par anticipation en fonction de conditions environnantes, et une unité de communication (36) reliée au dispositif de commande (26) pour échanger des données étant prévue avec une unité centrale de calcul (38), les données incluant des conditions environnantes, des paramètres de commande (SF)) et/ou des itinéraires (44), **caractérisée en ce que** la condition environnante est un paramètre de commande spécifique à l'itinéraire (SP) sous la forme d'une topographie, en particulier d'un profil d'altitudes, et/ou de la nature de terrain le long de l'itinéraire (44), et la condition environnante est un paramètre de commande spécifique à la machine (SF)) en forme de besoin de puissance au moins temporaire d'au moins un composant de la chaîne de transmission (20), à savoir de la transmission (24), d'un moyen mené auxiliaire et d'un appareil de travail (40) de la machine de travail agricole (10).

2. Machine de travail agricole selon la revendication 1, **caractérisée en ce que** le dispositif de commande est conçu et agencé de façon qu'une puissance d'entraînement du moteur d'entraînement (22) et/ou une charge de chaîne de transmission nécessaires à la machine de travail agricole (10) sur un itinéraire (44) à parcourir soient déterminables par anticipation.

3. Machine de travail agricole selon la revendication 2, **caractérisée en ce que** la puissance d'entraînement et/ou la charge de chaîne de transmission de la machine de travail agricole (10) sont régulables au moyen d'une régulation du moteur d'entraînement (22) et/ou de la chaîne de transmission (20), en particulier au moyen d'une configuration prédéterminable de la chaîne de transmission (20).

4. Machine de travail agricole selon une des revendications 2 ou 3, **caractérisée en ce que** des conditions environnantes sont des paramètres de commande (SF)) qui influencent la puissance d'entraînement et/ou la charge de chaîne de transmission nécessaires de la machine de travail agricole (10), en particulier sur un itinéraire (44) de la machine de travail agricole (10).

5. Machine de travail agricole selon une des revendications précédentes, **caractérisée en ce qu'**au moins une condition environnante est déterminable par l'intermédiaire de la machine de travail agricole (10), et en particulier par l'intermédiaire du dispositif de commande (26).

6. Machine de travail agricole selon une des revendications précédentes, **caractérisée en ce qu'**une unité de navigation (34) reliée au dispositif de commande (26) pour échanger des données est prévue avec un système de planification d'itinéraire pour établir l'itinéraire (44).

7. Procédé de régulation par anticipation d'une puissance d'entraînement et/ou d'une chaîne de transmission (20) pour une machine de travail agricole (10) conformée en tracteur, laquelle comporte au moins un moteur d'entraînement (22), une chaîne de transmission (20) incluant une transmission (24) ainsi qu'un dispositif de commande (26) pour commander et/ou réguler le moteur d'entraînement (22) et la chaîne de transmission (20) incluant la transmission (24), et un dispositif de détermination de position (28), le moteur d'entraînement (22), en particulier une puissance d'entraînement du moteur d'entraînement (22), et la chaîne de transmission (20) incluant la transmission (24) étant régulés par anticipation par l'intermédiaire du dispositif de commande (26) en fonction de conditions environnantes, et les conditions environnantes, des paramètres de commande (SP) et/ou des itinéraires (44), étant mémorisés de manière consultable dans une unité centrale de calcul (38) et/ou étant fournis par l'intermédiaire de l'unité centrale de calcul (38), une unité de communication (36) reliée au dispositif de commande (26) étant prévu pour échanger les données conditions environnantes, paramètres de commande (SF)) et/ou itinéraires (44) avec une unité centrale de calcul, **caractérisé en ce que** la condition environnante est un paramètre de commande spécifique à l'itinéraire (SP) sous la forme d'une topographie, en particulier d'un profil d'altitudes, et/ou de la nature de terrain le long de l'itinéraire (44), et la condition environnante est un paramètre de commande spécifique à la machine (SF)) en forme de besoin de puissance au moins temporaire d'au moins un composant de la chaîne de transmission (20), à savoir de la transmission (24), d'un moyen mené auxiliaire et d'un appareil de travail (40) de la machine de travail agricole (10).

8. Procédé selon la revendication 7, **caractérisé en ce que** la puissance d'entraînement et/ou la charge de chaîne de transmission nécessaires à la machine de travail agricole (10) sur un itinéraire (44) à parcourir sont déterminées par anticipation.

9. Procédé selon la revendication 8, **caractérisé en ce que** la puissance d'entraînement et/ou la charge de chaîne de transmission de la machine de travail agricole (10) sont régulables au moyen d'une régulation du moteur d'entraînement (22) et/ou de la chaîne de transmission (20), en particulier au moyen d'une configuration prédéterminable de la chaîne de transmission (20).

10. Procédé selon la revendication 7 ou 9, **caractérisé en ce qu'**au moins une condition environnante et/ou l'itinéraire (44) sont déterminés par l'intermédiaire de la machine de travail agricole (10), et en particulier par l'intermédiaire du dispositif de commande (26).
